# FASCICULE DE BREVET EUROPEEN

(11) **EP 4 610 502 B1**
(45) Date de publication et mention de la délivrance du brevet: **25.11.2026**
(21) Numéro de dépôt: 24160570.8
(22) Date de dépôt: 29.02.2024
(51) Int. Cl.: F16B 19/00, F16B 19/02, F16B 21/08, F16B 4/00

(54) **GOUPILLE POUR L'ASSEMBLAGE DE DEUX PIÈCES ENTRE ELLES**
STIFT ZUM VERBINDEN ZWEIER TEILE MITEINANDER
PIN FOR INTERCONNECTING TWO PARTS

(43) Date de publication de la demande: 03.09.2025
(60) Demande divisionnaire: 25154798.0 / 4 614 009
(73) Titulaire: ETA SA Manufacture Horlogère Suisse, 2540 Grenchen (CH)
(72) Inventeur: DONZÉ, Christophe, 2542 Pieterlen (CH); PHAM, Patric, 3298 Oberwil b. Büren (CH)
(74) Mandataire: ICB SA

(56) Documents cités:
- FR-A1- 2 885 970
- US-A- 2 596 940
- US-A- 3 093 874

## Description

### Domaine technique de l'invention

L'invention relève du domaine mécanique et en particulier des éléments permettant le positionnement relatif et l'assemblage de deux pièces l'une avec l'autre.

Plus particulièrement, l'invention concerne une goupille pour l'assemblage de deux pièces l'une avec l'autre.

### Arrière-plan technologique

Dans un assemblage de deux pièces, afin de positionner précisément les pièces à assembler l'une par rapport à l'autre, une ou plusieurs goupilles peuvent être utilisées. En particulier, la ou les goupilles sont introduites dans des logements s'étendant respectivement dans les deux pièces à assembler.

Toutefois, l'introduction de la goupille dans les logements des pièces, ainsi que son éventuel retrait, peuvent être relativement délicats du fait des frottements générés. En effet, les ajustements entre la goupille et les pièces sont généralement particulièrement serrés afin de limiter les jeux mécaniques pour garantir un positionnement relatif entre les pièces le plus précis possible.

Afin de pallier cet inconvénient, les goupilles peuvent être fendues axialement de sorte à présenter une élasticité radiale et faciliter leur engagement et leur éventuel retrait dans les logements avec lesquels elles sont destinées à coopérer.

Cependant, ce comportement élastique nuit à la précision du positionnement relatif entre les pièces de l'assemblage dans la mesure où la goupille peut se déformer de manière non déterminée lors de la réalisation de l'assemblage et ainsi varier le décalage éventuel d'une pièce par rapport à l'autre, d'un montage à l'autre.

Par ailleurs, l'introduction de la goupille dans les logements des pièces peut également provoquer un endommagement de la goupille et/ou des pièces du fait des frottements en cas de jeux presque nuls, voire du serrage en fonction des tolérances d'assemblage choisies. La précision du positionnement sera donc inversement proportionnelle au nombre de positionnement réalisé. Une goupille selon l'art antérieur est divulguée dans le document US 2596940 A.

Il existe donc un besoin de trouver une solution permettant à la fois de positionner le plus précisément possible deux pièces l'une par rapport à l'autre, de faciliter le montage et le démontage de l'assemblage, et de garantir un positionnement répétable au fil des montages et au cours du temps.

### Résumé de l'invention

L'invention résout les inconvénients précités et concerne, à cet effet, une goupille s'étendant selon un axe longitudinal entre une première extrémité destinée à être fixée à une première pièce et une deuxième extrémité destinée à être engagée dans un logement d'une deuxième pièce selon un ajustement sans jeu mécanique. La deuxième extrémité présente une découpe délimitant une partie fixe et une partie flexible et traversant de part en part la deuxième extrémité transversalement à l'axe longitudinal, la découpe étant configurée de sorte à présenter, dans un plan P contenant l'axe longitudinal, une projection dont la forme générale est asymétrique, la découpe présentant une première portion s'étendant depuis une ouverture vers la deuxième extrémité et une deuxième portion reliée à la première portion et s'étendant vers la première extrémité jusqu'à un fond de la découpe.

Grâce à ces caractéristiques, la goupille selon l'invention permet de pouvoir assurer un positionnement précis de la deuxième pièce par rapport à la première pièce. En effet, lors de l'engagement de la deuxième extrémité dans le logement de la deuxième pièce, la partie fixe ne se déforme pas et permet de maitriser le positionnement de la deuxième pièce. Par ailleurs, grâce à la découpe, les jeux sont toujours rattrapés dans un même sens, évitant ainsi une partie des incertitudes du positionnement des pièces l'une par rapport à l'autre.

Dans des modes particuliers de réalisation, l'invention peut comporter en outre l'une ou plusieurs des caractéristiques suivantes, prises isolément ou selon toutes les combinaisons techniquement possibles dans le cadre des revendications.

Selon l'invention, la découpe présente une première portion s'étendant depuis une ouverture vers la deuxième extrémité.

La découpe n'étant pas débouchante dans la deuxième extrémité, l'introduction de la goupille dans la deuxième pièce est facilitée.

Selon l'invention, la découpe présente une deuxième portion reliée à la première portion et s'étendant vers la première extrémité jusqu'à un fond de la découpe.

Dans des modes particuliers de réalisation, la deuxième portion est reliée à la première portion par une portion courbe.

Dans des modes particuliers de réalisation, la découpe est configurée de sorte que la première et la deuxième portion définissent un angle α dont la bissectrice est matérialisée par l'axe longitudinal de la goupille.

Selon des modes de réalisation non revendiqués, la première portion s'étend selon une direction sensiblement rectiligne jusqu'à une cavité définissant un fond de la découpe.

Selon des modes de réalisation non revendiqués, la cavité présente une section de forme circulaire dont le diamètre est supérieur à la largeur de la découpe.

Dans des modes particuliers de réalisation, la partie flexible forme une pointe s'étendant selon l'axe longitudinal de la goupille, ladite pointe étant interposée entre une portion d'accroche par laquelle elle est reliée à la partie fixe et une portion libre mobile entre une position de repos et une position contrainte.

Dans des modes particuliers de réalisation, la deuxième extrémité présente au moins un méplat s'étendant sur la partie fixe et sur la partie flexible.

Selon un autre aspect, la présente invention concerne également un assemblage d'une première et d'une deuxième pièce par l'intermédiaire d'une goupille telle que précédemment décrite, dans lequel la première extrémité de la goupille est fixée à la première pièce, ou dans lequel la première extrémité de la goupille et la première pièce sont constituées par une même pièce, et la deuxième extrémité de la goupille est engagée dans un logement de la deuxième pièce selon un ajustement sans jeu mécanique, de sorte que la partie flexible soit contrainte à se déformer de sorte à générer une force de rappel élastique à l'origine d'efforts de serrage de la deuxième extrémité sur la deuxième pièce.

Dans des modes particuliers de réalisation, la deuxième extrémité présente une dimension diamétrale d1 définie entre une surface périphérique de la partie fixe et une surface périphérique de la partie flexible lorsque la portion libre est en position de repos, lesdites surfaces périphériques définissant une dimension d2 lorsque la portion libre est en position contrainte. La goupille est dimensionnée de sorte que la dimension d1 est supérieure à une dimension d3 d'un diamètre du logement de la deuxième pièce et de sorte que la dimension d2 est égale à ladite dimension d3.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- La figure 1 représente une vue en perspective d'une goupille selon un exemple de réalisation de la présente invention et une vue de détail d'une extrémité de la goupille ;
- la figure 2 représente une vue de côté de la goupille de la figure 1 ;
- la figure 3 représente une vue de face de la goupille de la figure 1 ;
- la figure 4 représente une vue de côté de la goupille selon une autre variante de réalisation pas revendiquée.
- la figure 5 représente une vue de côté de la goupille de la figure 4 dans un assemblage de deux pièces.

On note que les figures ne sont pas nécessairement dessinées à l'échelle pour des raisons de clarté.

### Description détaillée de l'invention

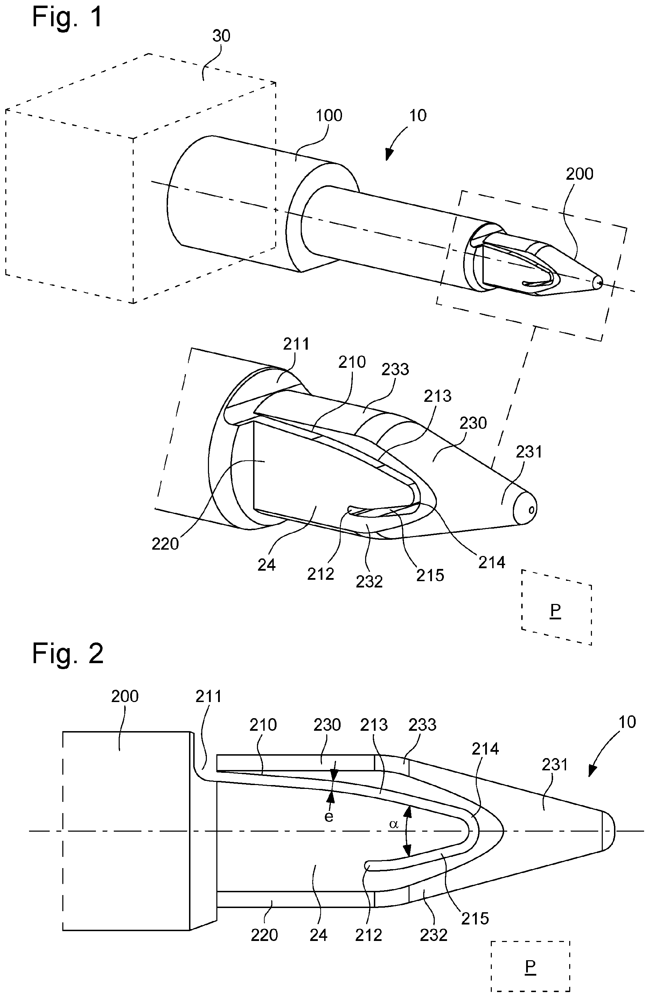

La présente invention concerne une goupille 10 telle que représentée dans un exemple de réalisation sur les figures 1 à 5. La goupille 10 est destinée à être fixée à une première pièce 30 et à une deuxième pièce 20 afin de les lier l'une à l'autre de sorte à réaliser un assemblage dans lequel la position desdites pièces l'une par rapport à l'autre est très précise et répétable.

Comme visible sur la figure 1, la goupille 10 s'étend selon un axe longitudinal entre une première extrémité 100 destinée à être solidaire de la première pièce 30, et une deuxième extrémité 200 destinée à être engagée dans un logement 21 de la deuxième pièce 20 selon un ajustement sans jeu mécanique. La goupille 10 est préférentiellement monobloc, c'est-à-dire qu'elle est réalisée dans un unique brut de matière.

Il y a lieu de noter que la goupille 10 et la première pièce 30 peuvent être constituées par une même pièce ou par deux pièces distinctes. Dans ce dernier cas, qui est préféré, la première extrémité 100 de la goupille 10 est destinée à être fixée à la première pièce 30 dans le sens où elles sont destinées à être liées l'une à l'autre par une liaison mécanique de type encastrement. La goupille 10 peut être chassée, collée, soudée, etc., avec la première pièce 30.

En particulier, comme le montre la vue de détail de la figure 1, la deuxième extrémité 200 présente une découpe 210 séparant une partie fixe 220 et une partie flexible 230. La partie fixe 220 et la partie flexible 230 sont respectivement indéformable et élastiquement déformable par rapport à la première extrémité 100 dans des conditions d'utilisation normales de la goupille 10, c'est-à-dire lorsque la deuxième extrémité 200 est engagée dans la deuxième pièce 20, ou éventuellement dégagée de cette dernière. Les propriétés indéformable et déformable respectivement des parties fixe 220 et flexible 230 sont conférées par leur dimensionnement, ce dernier étant en tant que tel à la portée de l'homme du métier.

La découpe 210 est une fente s'étendant en longueur entre une ouverture 211 et un fond 212 et traversant de part en part la deuxième extrémité 200 transversalement à l'axe longitudinal, comme visible sur la vue de détail de la figure 1 et sur les figures 2, 4 et 5. En particulier, la découpe 210 présente une projection dans un plan P contenant l'axe longitudinal, dont la forme générale est asymétrique. Il y a lieu de noter que la formulation « forme générale asymétrique » désigne l'ensemble de la forme de la projection de la découpe 210. Dans les exemples de réalisation de l'invention représentés sur les figures, le plan P est orthogonal à une direction transversale selon laquelle s'étend la découpe 210.

La forme de la découpe 210 permet avantageusement de répartir les contraintes auxquelles est soumise la partie flexible 230 lors de la fixation de la deuxième pièce 20 à la goupille 10 et d'augmenter la précontrainte de la partie flexible 230. Une telle disposition permet de réduire le risque d'endommagement de la goupille et participe à assurer le maintien en position de la deuxième pièce 20 dans l'assemblage, dans la mesure où elle favorise le retour élastique de la partie flexible 230, comme décrit plus en détail dans la suite du texte. Par ailleurs, la partie fixe présente une rigidité suffisante pour ne pas se déformer lors de l'assemblage de la première et de la deuxième pièce 30 et 20, permettant ainsi d'assurer un positionnement relatif de ces dernières très précis et répétable.

Comme le montre la figure 2, la découpe 210 présente une première portion 213 s'étendant depuis l'ouverture 211, vers la deuxième extrémité 200. La première portion 213 est reliée, préférentiellement par une portion courbe 214, à une deuxième portion 215 s'étendant jusqu'au fond 212 de la découpe 210. La deuxième portion 215 s'étend avantageusement vers la première extrémité 100, comme visible sur les figures 1 et 2, de sorte à favoriser la répartition de contraintes dans la partie flexible 230 lors de sa déformation.

Dans l'exemple de réalisation représenté sur la figure 2, la découpe 210 est conformée de sorte que la première et la deuxième portion 213 et 215 définissent un angle α dont la bissectrice est matérialisée par l'axe longitudinal de la goupille 10, afin de participer encore à la répartition des contraintes dans la partie flexible 230 lors de sa déformation. À titre d'exemple, l'angle α peut être compris entre 10 et 50 degrés, voire entre 15 et 25 degrés.

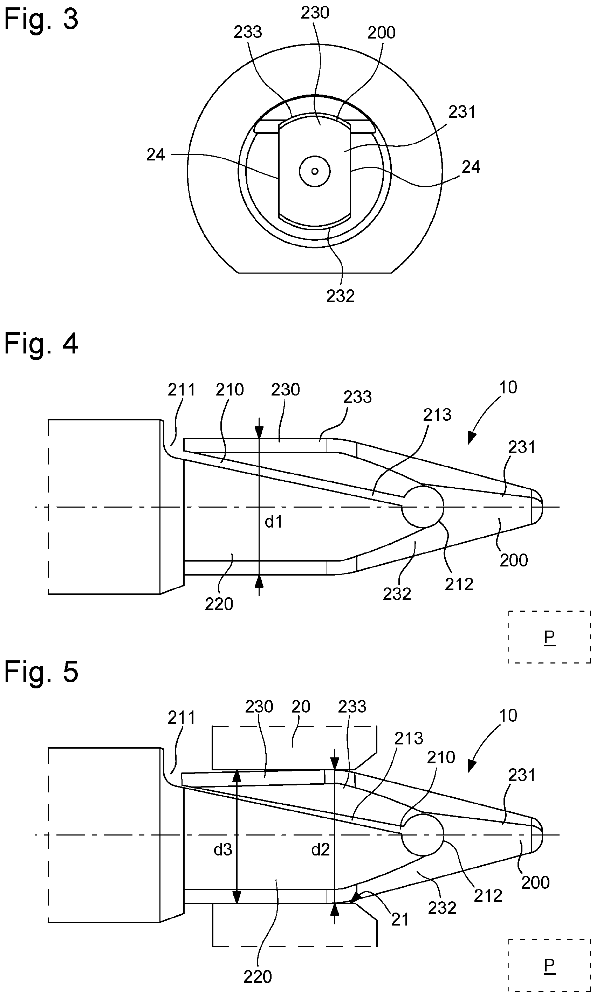

Dans une autre variante de réalisation pas revendiquée et représentée sur les figures 4 et 5, la découpe 210 présente uniquement une première portion 213 s'étendant selon une direction sensiblement rectiligne jusqu'à une cavité définissant le fond 212 de la découpe 210.

La cavité présente préférentiellement une section de forme circulaire, dont le diamètre est supérieur à la largeur de la découpe. Cette caractéristique permet d'éviter les concentrations de contraintes lors de la déformation de la partie flexible 230 lors de l'assemblage de la première et de la deuxième pièce 30 et 20.

Afin de faciliter l'engagement de la deuxième extrémité 200 dans le logement 21 de la deuxième pièce 20, la partie flexible 230 forme une pointe 231 s'étendant selon l'axe longitudinal de la goupille 10. La partie flexible 230 comporte une portion d'accroche 232 reliant la pointe 231 à la partie fixe 220 et une portion libre 233 s'étendant vers la première extrémité 100. Tel que visible sur les figures, la pointe 231 est donc interposée entre la portion d'accroche 232 et la portion libre 233. La conformation en pointe de la deuxième extrémité 200 permet de faciliter l'engagement de ladite extrémité dans le logement 21 de la deuxième pièce 20, tout en évitant tout risque d'endommagement de la goupille et/ou de la pièce.

La portion libre 233 est configurée pour être mobile entre une position de repos dans laquelle elle se trouve lorsque la deuxième extrémité 200 n'est pas engagée dans le logement 21 de la deuxième pièce 20, comme visible sur les figures 1 à 4, et une position contrainte dans laquelle elle se trouve lorsque la deuxième extrémité 200 est engagée dans le logement 21 de la deuxième pièce 20, comme visible sur la figure 5. Lorsque la portion libre 233 occupe la position contrainte, elle est plus proche de la partie fixe 220 que lorsqu'elle occupe la position de repos. En d'autres termes, lorsque la deuxième extrémité 200 de la goupille 10 est engagée dans le logement 21 de la deuxième pièce 20, la partie flexible 230 est contrainte à se déformer et à générer une force de rappel élastique à l'origine d'efforts de serrage appliqués par la deuxième extrémité 200 sur la deuxième pièce 20.

La découpe 210 peut être réalisée par électroérosion, usinage mécanique, usinage laser ou par toute autre méthode d'enlèvement de matière adaptée. La découpe 210 présente préférentiellement, sur au moins une partie de sa longueur, une largeur e constante lorsque la portion libre 233 est dans une position de repos, comme visible sur les vues de côté des figures 2 et 4.

Afin de réduire les frottements avec la deuxième pièce 20 lors de l'engagement de la goupille 10, et d'un éventuel dégagement, la deuxième extrémité 200 peut présenter au moins un méplat 24 s'étendant, préférentiellement selon un plan parallèle à l'axe longitudinal, sur la partie fixe 220 et sur la partie flexible 230. Dans l'exemple de réalisation représenté sur les figures, la goupille 10 comprend deux méplats 24 diamétralement opposés et parallèles l'un à l'autre, comme le montre la figure 3. Dans d'autres exemples non représentés, la goupille 10 peut comporter trois méplats 24 ou plus, régulièrement répartis autour de l'axe longitudinal.

Il est à noter qu'un même assemblage peut comporter plusieurs goupilles 10 afin, par exemple, de supprimer tout degré de liberté en rotation entre les deux pièces assemblées. Notamment, une goupille 10 peut avoir comme fonction de centrer les pièces l'une par rapport à l'autre, et l'autre goupille 10 peut avoir comme fonction de les aligner l'une par rapport à l'autre.

De manière générale, il découle de la description de l'invention qui est réalisée ci-dessus et des figures que la deuxième extrémité 200 présente une dimension diamétrale d1 définie entre une surface périphérique de la partie fixe 220 et une surface périphérique de la partie flexible 230 lorsque la portion libre 233 est en position de repos, lesdites surfaces périphériques définissant une dimension d2 maximale lorsque la portion libre 233 est en position contrainte. La goupille 10 est dimensionnée de sorte que la dimension d1 soit supérieure à une dimension d3 d'un diamètre du logement 21 de la deuxième pièce 20 et de sorte que la dimension d2 soit égale à ladite dimension d3.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Goupille (10) s'étendant selon un axe longitudinal entre une première extrémité (100) destinée à être solidaire d'une première pièce (30) et une deuxième extrémité (200) destinée à être engagée dans un logement (21) d'une deuxième pièce (20) selon un ajustement sans jeu mécanique, où la deuxième extrémité (200) présente une découpe (210) délimitant une partie fixe (220) et une partie flexible (230) et traversant de part en part la deuxième extrémité (200) transversalement à l'axe longitudinal, la découpe (210) étant configurée de sorte à présenter, dans un plan P contenant l'axe longitudinal, une projection dont la forme générale est asymétrique, la découpe (210) présentant une première portion (213) s'étendant depuis une ouverture (211) vers la deuxième extrémité (200), la goupille (10) étant **caractérisée en ce que** une deuxième portion (215) est reliée à la première portion (213) et s'étend vers la première extrémité (100) jusqu'à un fond (212) de la découpe (210).

2. Goupille (10) selon la revendication 1, dans laquelle la deuxième portion (215) est reliée à la première portion (213) par une portion courbe (214).

3. Goupille (10) selon la revendication 1 ou 2, dans laquelle la découpe (210) est configurée de sorte que la première et la deuxième portion (213, 215) définissent un angle α dont la bissectrice est matérialisée par l'axe longitudinal de la goupille (10).

4. Goupille (10) selon l'une des revendications 1 à 3, dans laquelle la partie flexible (230) forme une pointe (231) s'étendant selon l'axe longitudinal de la goupille (10), ladite pointe (231) étant interposée entre une portion d'accroche (232) par laquelle elle est reliée à la partie fixe (220) et une portion libre (233) mobile entre une position de repos et une position contrainte.

5. Goupille (10) selon l'une des revendications 1 à 4, dans laquelle la deuxième extrémité (200) présente au moins un méplat (24) s'étendant sur la partie fixe (220) et sur la partie flexible (230).

6. Assemblage d'une première et d'une deuxième pièce (20) par l'intermédiaire d'une goupille (10) selon l'une des revendications 1 à 5, dans lequel la première extrémité (100) de la goupille (10) est fixée à la première pièce (30) et la deuxième extrémité (200) de la goupille (10) est engagée dans un logement (21) de la deuxième pièce (20) selon un ajustement sans jeu mécanique, de sorte que la partie flexible (230) soit contrainte à se déformer de sorte à générer une force de rappel élastique à l'origine d'efforts de serrage de la deuxième extrémité (200) sur la deuxième pièce (20).

7. Assemblage d'une première et d'une deuxième pièce (20) par l'intermédiaire d'une goupille (10) selon l'une des revendications 1 à 5, dans lequel la première extrémité (100) de la goupille (10) et la première pièce (30) sont constituées par une même pièce, la deuxième extrémité (200) de la goupille (10) étant engagée dans un logement (21) de la deuxième pièce (20) selon un ajustement sans jeu mécanique, de sorte que la partie flexible (230) soit contrainte à se déformer de sorte à générer une force de rappel élastique à l'origine d'efforts de serrage de la deuxième extrémité (200) sur la deuxième pièce (20).

8. Assemblage selon la revendication 6 ou 7, dans lequel la deuxième extrémité (200) présente une dimension diamétrale d1 définie entre une surface périphérique de la partie fixe (220) et une surface périphérique de la partie flexible (230) lorsque la portion libre (233) est en position de repos, lesdites surfaces périphériques définissant une dimension d2 lorsque la portion libre (233) est en position contrainte, la goupille (10) étant dimensionnée de sorte que la dimension d1 soit supérieure à une dimension d3 d'un diamètre du logement (21) de la deuxième pièce (20) et de sorte que la dimension d2 soit égale à ladite dimension d3.

## Patentansprüche

1. Stift (10), der sich entlang einer Längsachse zwischen einem ersten Ende (100), das dazu bestimmt ist, fest mit einem ersten Bauteil (30) verbunden zu werden, und einem zweiten Ende (200), das dazu bestimmt ist, gemäß einer spielfreien Passung in eine Aufnahme (21) eines zweiten Bauteils (20) eingesetzt zu werden, erstreckt, wobei das zweite Ende (200) eine Aussparung (210) aufweist, die einen festen Abschnitt (220) und einen flexiblen Abschnitt (230) begrenzt und das zweite Ende (200) quer zur Längsachse vollständig durchsetzt, wobei die Aussparung (210) so konfiguriert ist, dass sie in einer die Längsachse enthaltenden Ebene P eine Projektion mit einer allgemein asymmetrischen Form aufweist, wobei die Aussparung (210) einen ersten Teilabschnitt (213) aufweist, der sich von einer Öffnung (211) in Richtung des zweiten Endes (200) erstreckt, wobei der Stift (10) **dadurch gekennzeichnet ist, dass** ein zweiter Teilabschnitt (215) mit dem ersten Teilabschnitt (213) verbunden ist und sich in Richtung des ersten Endes (100) bis zu einem Grund (212) der Aussparung (210) erstreckt.

2. Stift (10) nach Anspruch 1, wobei der zweite Teilabschnitt (215) über einen gekrümmten Teilabschnitt (214) mit dem ersten Teilabschnitt (213) verbunden ist.

3. Stift (10) nach Anspruch 1 oder 2, wobei die Aussparung (210) so konfiguriert ist, dass der erste und der zweite Teilabschnitt (213, 215) einen Winkel α definieren, dessen Winkelhalbierende durch die Längsachse des Stifts (10) gebildet ist.

4. Stift (10) nach einem der Ansprüche 1 bis 3, wobei der flexible Abschnitt (230) eine Spitze (231) bildet, die sich entlang der Längsachse des Stifts (10) erstreckt, wobei die genannte Spitze (231) zwischen einem Befestigungsabschnitt (232), über den sie mit dem festen Abschnitt (220) verbunden ist, und einem freien Abschnitt (233) angeordnet ist, der zwischen einer Ruhestellung und einer belasteten Stellung beweglich ist.

5. Stift (10) nach einem der Ansprüche 1 bis 4, wobei das zweite Ende (200) mindestens eine Abflachung (24) aufweist, die sich über den festen Abschnitt (220) und den flexiblen Abschnitt (230) erstreckt.

6. Anordnung eines ersten Bauteils und eines zweiten Bauteils (20) mittels eines Stifts (10) nach einem der Ansprüche 1 bis 5, wobei das erste Ende (100) des Stifts (10) an dem ersten Bauteil (30) befestigt ist und das zweite Ende (200) des Stifts (10) gemäß einer spielfreien Passung in eine Aufnahme (21) des zweiten Bauteils (20) eingesetzt ist, sodass der flexible Abschnitt (230) zu einer Verformung gezwungen wird und dadurch eine elastische Rückstellkraft erzeugt, die Klemmkräfte zwischen dem zweiten Ende (200) und dem zweiten Bauteil (20) bewirkt.

7. Anordnung eines ersten Bauteils und eines zweiten Bauteils (20) mittels eines Stifts (10) nach einem der Ansprüche 1 bis 5, wobei das erste Ende (100) des Stifts (10) und das erste Bauteil (30) einstückig miteinander ausgebildet sind, wobei das zweite Ende (200) des Stifts (10) gemäß einer spielfreien Passung in eine Aufnahme (21) des zweiten Bauteils (20) eingesetzt ist, sodass der flexible Abschnitt (230) zu einer Verformung gezwungen wird und dadurch eine elastische Rückstellkraft erzeugt, die Klemmkräfte zwischen dem zweiten Ende (200) und dem zweiten Bauteil (20) bewirkt.

8. Anordnung nach Anspruch 6 oder 7, wobei das zweite Ende (200) eine diametrale Abmessung d1 aufweist, die zwischen einer Umfangsfläche des festen Abschnitts (220) und einer Umfangsfläche des flexiblen Abschnitts (230) definiert ist, wenn sich der freie Abschnitt (233) in der Ruhestellung befindet, wobei die genannten Umfangsflächen eine Abmessung d2 definieren, wenn sich der freie Abschnitt (233) in der belasteten Stellung befindet, wobei der Stift (10) so dimensioniert ist, dass die Abmessung d1 größer als eine Abmessung d3 des Durchmessers der Aufnahme (21) des zweiten Bauteils (20) ist und dass die Abmessung d2 gleich der genannten Abmessung d3 ist.

## Claims

1. Pin (10) extending along a longitudinal axis between a first end (100) intended to be rigidly connected to a first part (30) and a second end (200) intended to be engaged in a recess (21) in a second part (20), with a fit without mechanical play, wherein the second end (200) has a cut-out (210) delimiting an unmoving part (220) and a flexible part (230) and passing through, from end to end, the second end (200) transversely to the longitudinal axis, the cut-out (210) being configured so as to have, in a plane P containing the longitudinal axis, a projection whose general shape is asymmetrical, the cut-out (210) having a first portion (213) extending from an opening (211) towards a free end of the second end (200), the pin (10) being **characterised in that** a second portion (215) is connected to the first portion (213) and extends towards the first end (100) as far as a bottom (212) of the cut-out (210).

2. Pin (10) according to claim 1, wherein the second portion (215) is connected to the first portion (213) by a curved portion (214).

3. Pin (10) according to claim 1 or 2, wherein the cut-out (210) is configured so that the first and the second portion (213, 215) define an angle α, the bisector of which is materialised by the longitudinal axis of the pin (10).

4. Pin (10) according to one of claims 1 to 3, wherein the free end of the second end (200) forms a point (231) extending along the longitudinal axis of the pin (10), said point (231) being interposed between a hooking portion (232) via which it is connected to the unmoving part (220), and a free portion (233) capable of moving between a rest position and a stressed position.

5. Pin (10) according to one of claims 1 to 4, wherein the second end (200) has at least one flat section (24) extending over the unmoving part (220) and over the flexible part (230).

6. Assembly of a first and of a second part (20) by way of a pin (10) according to one of claims 1 to 5, wherein the first end (100) of the pin (10) is fastened to the first part (30) and the second end (200) of the pin (10) is engaged in a recess (21) in the second part (20), with a fit without mechanical play, such that the flexible part (230) is forced to deform and generate a resilient return force which causes the clamping forces applied by the second end (200) to the second part (20).

7. Assembly of a first and of a second part (20) by way of a pin (10) according to one of claims 1 to 5, wherein the first end (100) of the pin (10) and the first part (30) are constituted by the same part, the second end (200) of the pin (10) being engaged in a recess (21) in the second part (20), with a fit without mechanical play, such that the flexible part (230) is forced to deform and generate a resilient return force which causes the clamping forces applied by the second end (200) to the second part (20).

8. Assembly according to claim 6 or 7, wherein the second end (200) has a diametrical dimension d1 defined between a peripheral surface of the unmoving part (220) and a peripheral surface of the flexible part (230) when the free portion (233) is in a rest position, said peripheral surfaces defining a dimension d2 when the free portion (233) is in a stressed position, the pin (10) being dimensioned such that the dimension d1 is greater than a dimension d3 of a diameter of the recess (21) in the second part (20), and such that the dimension d2 is equal to said dimension d3.
